# EUROPÄISCHE PATENTANMELDUNG

(11) **EP 2 650 993 A2**
(43) Veröffentlichungstag der Anmeldung: **16.10.2013**
(21) Anmeldenummer: 13160910.9
(22) Anmeldetag: 25.03.2013
(51) Int. Cl.: H02G 3/08

(54) **Anordnung zum Installieren von Geräten der Gebäudesystemtechnik**

(30) Priorität: 10.04.2012 DE 102012205788; 12.04.2012 DE 102012205983
(71) Anmelder: Siemens Aktiengesellschaft, 80333 München (DE)
(72) Erfinder: Langels, Hans-Joachim, 84085 Langquaid (DE); Mauer, Alexander, 93049 Regensburg (DE)

(57) **Zusammenfassung**

Ein Gehäuse (3), welches eine Steuereinrichtung (4) zur Ausführung einer elektronischen Funktion beinhaltet, sowie ein Basismodul (2), das zur Befestigung des Gehäuses (3) für eine vorbestimmte Montagesituation ausgebildet ist, sind für eine feste aber lösbare Verbindung ausgebildet. Damit ist in Abhängigkeit von der Montagesituation das Gehäuse (3) mit einem an die jeweilige Montagesituation angepassten Basismodul (2) verbindbar. Das Basismodul ist als Installationskasten mit einer Sammelschiene ausgeführt, wodurch eine geringe Bauhöhe erzielt werden kann.

## Beschreibung

Die Erfindung betrifft eine Anordnung zum Installieren von Geräten der Gebäudesystemtechnik.

In der Gebäudesystemtechnik werden Installationsgeräte, beispielsweise Aktoren und Sensoren, in Gebäuden installiert. Die dabei verwendeten Installationsgeräte unterscheiden sich im Wesentlichen hinsichtlich ihrer Funktion sowie der Montagesituation, in der die Installationsgeräte verbaut werden. Dabei werden beispielsweise Taster, Bewegungsmelder, Regler oder Anzeige- und Bedieneinheiten hinsichtlich ihrer jeweiligen Funktion, wie zum Beispiel Schalten, Dimmen, Temperaturmessung oder Sonnenschutzsteuerung in verschiedenen Montagesituationen, wie Unter-Putz, Auf-Putz, unter aufgeständerten Böden oder oberhalb abgehängter Decken, eingesetzt. Für diese unterschiedlichen Funktionen und Montagesituationen existieren unterschiedliche Bauformen und Montagearten, welche eine Vielzahl an Produktvarianten erforderlich machen. Dabei sind die geometrischen Ausdehnungen der Bauformen ein wesentlicher Faktor für mögliche Einsatzorte.

Es ist die Aufgabe der vorliegenden Erfindung, eine Anordnung zum Installieren von Geräten der Gebäudesystemtechnik bereitzustellen, welche sich durch möglichst geringe Bauhöhen auszeichnet.

Diese Aufgabe wird durch die erfindungsgemäße Anordnung gemäß dem unabhängigen Anspruch gelöst. Vorteilhafte Ausgestaltungen sind Gegenstand der abhängigen Ansprüche.

Die erfindungsgemäße Anordnung zum Installieren von Geräten der Gebäudesystemtechnik weist ein Gehäuse auf, welches eine Steuereinrichtung zur Ausführung einer elektronischen Funktion beinhaltet. Weiterhin weist die Anordnung ein Basismodul auf, welches zur Befestigung des Gehäuses für eine vorbestimmte Montagesituation ausgebildet ist. Dabei sind das Gehäuse und das Basismodul für eine feste aber lösbare Verbindung ausgebildet, so dass in Abhängigkeit von der Montagesituation das Gehäuse mit einem an die jeweilige Montagesituation angepassten Basismodul verbindbar ist.

Durch die modulare Unterteilung eines Installationsgerätes in ein Basismodul und ein Gehäuse, welches die Steuereinrichtung zur Ausführung einer definierten Funktion beinhaltet, kann eine Vielfalt an Varianten deutlich reduziert werden.

Mittels der in dem Gehäuse angeordneten Steuereinrichtung wird eine Anpassung an die zu realisierende Funktion erreicht. Indem verschiedene Steuereinrichtungen mit unterschiedlichen Basismodulen kombiniert werden können, werden deutlich weniger Einzel-Komponenten zur Realisierung der unterschiedlichen Anforderungen hinsichtlich Funktion und Montagesituation benötigt. Damit ist es möglich, dass ein Installateur dasjenige Installationsgerät, welches er als nächstes benötigt, aus einer überschaubaren Anzahl an Basismodulen und Gehäusen mit Steuereinrichtung selbst zusammenstellt, beispielsweise durch Zusammenstecken der betreffenden Komponenten. Basismodul und Gehäuse können somit vom Installateur anwendungsspezifisch konfiguriert werden. Auf diese Weise wird der Aufwand in der Entwicklung, der Fertigung, der Logistik sowie für die Installation deutlich reduziert.

Das Basismodul ist als verschließbarer Installationskasten ausgebildet, wobei der Installationskasten eine Busanschlussleitung zum Anschluss an ein Bussystem aufweist, über die das Basismodul mit dem Bussystem koppelbar ist.

Die Verwendung eines Installationskastens stellt eine Montageart für eine Decken- oder Bodenmontage vorgesehen, d. h. der Installationskasten wird unterhalb aufgeständerter Böden oder oberhalb abgehängter Decken installiert. Im Gegensatz zur Unter-Putz-Montage, bei der die Anordnung in einer Unter-Putz-Dose montiert wird, ist der Installationskasten größer dimensioniert und verschließbar ausgebildet. Damit ist einerseits eine Schutzfunktion, beispielsweise gegenüber elektrischen Schlag, Feuchtigkeit, Staub oder anderen Umgebungseinflüssen realisierbar. Ferner kann der Installationskasten gegen unbefugten Zugriff gesichert werden.

Der Installationskasten weist eine Sammelschiene zum Auflegen elektrischer Leitungen auf. Dadurch kann eine vergleichsweise sehr geringe Bauhöhe realisiert werden. Insbesondere im Vergleich mit Hutschienen, welche Reiheneinbaugeräten aufweisen. Ferner insbesondere, wenn Reiheneinbaugeräte bzw. Basismodule auf der Hutschiene befestigt würden.

In der Praxis kann mit einer Sammelschiene die Bauhöhe von 70mm auf 50mm reduziert werden. Somit ist ein Einsatz der Installationskästen mit Sammelschiene in niedrig aufgeständerten Böden bzw. niedrig abgehängten Decken möglich.

In einer weiteren vorteilhaften Weiterbildung der Anordnung ist die Busanschlussleitung zur Leistungsversorgung des Basismoduls ausgebildet.

Durch Verwendung der Busanschlussleitung zur Leistungsversorgung des Basismoduls kann auf eine eigene Stromleitung verzichtet werden. Dadurch wird der Installationsaufwand für das Basismodul weiter reduziert.

In einer weiteren vorteilhaften Weiterbildung der Anordnung ist die Leistungsversorgung über eine im Installationskasten angeordnete, Versorgung realisiert.

Eine Leistungsversorgung ist beispielsweise vorteilhaft, wenn die im Installationskasten benötigte Energiemenge die über die Busanschlussleitung verfügbare Energiemenge übersteigt. Die Versorgung kann als modulares Leistungsversorgungsmodul ausgebildet sein, welches auf einfache Art und Weise im Installationskasten durch Aufstecken auf eine vordefinierte Schnittstelle installiert werden kann. Zur Anpassung an die Leistungsaufnahme der im Installationskasten montierten Geräte ist es möglich, im Installationskasten mehrere Steckplätze für derartige Leistungsversorgungsmodule vorzusehen. Es ist selbstverständlich ebenfalls möglich, ein derartiges Leistungsversorgungsmodul zusätzlich zur Leistungsversorgung über die Busanschlussleitung einzusetzen.

In einer weiteren vorteilhaften Weiterbildung der Anordnung ist an den Installationskasten ein weiterer Installationskasten über die Busanschlussleitung ankoppelbar.

Durch das Ankoppeln eines weiteren Installationskastens über die Busanschlussleitung kann die Anzahl der zur Verfügung stehenden Steckplätze zur Installation von Installationsgeräten für die Gebäude-Systemtechnik variiert werden. Dabei ist es möglich, auch die Geräte im zweiten angekoppelten Installationskasten über die Busanschlussleitung mit Leistung zu versorgen. Es ist jedoch ebenso möglich, in zumindest einem der beiden gekoppelten Installationskästen ein Leistungsversorgungsmodul vorzusehen. Um die in diesem Installationskasten installierten Installationsgeräte mit Leistung zu versorgen.

In einer vorteilhaften Weiterbildung der Anordnung beinhaltet das Gehäuse eine Steuereinrichtung für eine Temperatursteuerung und/oder eine Lichtsteuerung und/oder eine Sonnenschutzsteuerung und/oder eine Brandschutzüberwachung und/oder eine Einbruchssicherung.

Bei den genannten Alternativen handelt es sich um gängige Steuerungsfunktionen aus dem Bereich der Gebäude-Systemtechnik, welche hier beispielhaft aufgeführt sind. Es ist jedoch ebenfalls möglich, das Gehäuse mit einer Steuereinrichtung zur Durchführung einer anderen als den genannten Funktionen auszustatten.

In einer weiteren vorteilhaften Weiterbildung der Anordnung ist das Basismodul zur Aufnahme mehrerer Gehäuse ausgebildet.

Hieraus ergibt sich der Vorteil, dass gemeinsame Funktionalitäten, welche den mehreren Gehäusen zur Verfügung gestellt werden, nur einmal in Basismodul bereitgestellt werden müssen. Hierbei kann es sich beispielsweise um Befestigungsmittel für die jeweilige Montagesituation handeln.

Ebenso können weitere Funktionalitäten, welche von mehreren Gehäusen genutzt werden, im Basismodul einheitlich zur Verfügung gestellt werden. Dies gilt sowohl für Gehäuse, deren Steuereinrichtungen dieselbe Funktionalität aufweisen, als auch für Gehäuse mit Steuereinrichtungen unterschiedlicher Funktionalität. Für das Funktionieren der Anordnung ist es aber nicht erforderlich, dass mehrere Gehäuse mit dem Basismodul gekoppelt sind. Es ist ebenso möglich, dass lediglich ein Gehäuse mit dem Basismodul verbunden ist, wobei die Möglichkeit zur Aufnahme weiterer Gehäuse besteht. Darüber hinaus ist es möglich, durch eine, beispielsweise mechanische, Codierung an bestimmten Stellen des Basismoduls, welche zur Aufnahme eines Gehäuses ausgebildet sind, nur das Anordnen bestimmter Gehäuse zu ermöglichen und das Anordnen anderer Gehäuse zu sperren. Auf diese Weise wird ermöglicht, eine definierte Funktion nur mit einer oder mehreren definierten Montagesituationen zu kombinieren und eine oder mehrere andere Montagesituationen für die betreffende Funktion zu sperren.

In einer weiteren vorteilhaften Weiterbildung der Anordnung sind das Gehäuse und das Basismodul über eine Schnittstelle miteinander verbunden, die zur Übertragung elektrischer Signale und/oder zur elektrischen Leistungsversorgung ausgebildet ist.

Ist das Basismodul an eine Leistungsversorgung angeschlossen, so kann über die Schnittstelle auch dem Gehäuse angeordnete Steuereinrichtung mit Spannung versorgt werden. Vorteilhafterweise sind alle für die Ausführung der betreffenden Funktion der Steuereinrichtung notwendigen Hard- und Software-Komponenten in dem Gehäuse angeordnet. Gemeinsame Funktionalitäten können in dem Basismodul angeordnet werden. Über die Schnittstelle kann dann auch die Kommunikation zwischen dem Basismodul und dem Gehäuse bzw. der Steuereinrichtung realisiert werden.

In einer weiteren vorteilhaften Weiterbildung der Anordnung ist das Basismodul an ein Bussystem ankoppelbar, so dass über die Schnittstelle eine Verbindung der Steuereinrichtung mit dem Bussystem realisiert ist.

Zur Ankopplung des Basismoduls an das Bussystem ist ein Prozessor im Basismodul nicht zwingend erforderlich: falls in jedem mit dem Basismodul gekoppelten Gehäuse die zur BusKommunikation benötigte Prozessortechnologie integriert ist, ist zur Realisierung einer Kommunikation der Steuereinrichtung mit dem Bussystem seitens des Basismoduls eine einfache Busanschlussklemme ausreichend. Durch Verbinden des Gehäuses mit dem Basismodul wird mittels der Steuereinrichtung automatisch erkannt, ob die Anordnung als Busgerät oder als Elektronikmodul eingesetzt werden soll, d.h. ob das Basismodul an ein Bussystem angeschlossen ist oder ob es unabhängig von einem Bussystem betrieben wird. Ist die Anordnung an ein Bussystem angeschlossen, so kann die Energieversorgung für die Kommunikation der Steuereinrichtung mit dem Bussystem über die Busleitung zur Verfügung gestellt werden. Alternativ ist es ebenso möglich, eine dezentrale Spannungsversorgung zu verwenden.

In einer weiteren vorteilhaften Weiterbildung der Anordnung ist die Steuereinrichtung mit einem Bedienmodul verbunden, so dass eine Ansteuerung der Steuereinrichtung ermöglicht wird.

Mit Hilfe des Bedienmoduls können Steuerbefehle durch einen Anwender auf einfache Art und Weise an die Steuereinrichtung übertragen werden. Bei dem Bedienmodul kann es sich beispielsweise um einen Taster, einen Dimmer oder ein sonstiges Bediengerät handeln. Da zur Realisierung unterschiedlicher Funktionen zum Teil unterschiedliche Bedienmodule nötig sind, weisen diese eine definierte, einheitliche Schnittstelle auf, so dass sie modular mit dem jeweiligen Basismodul oder der jeweiligen Steuereinrichtung der Anordnung kombinierbar sind. Die jeweilige Kombination muss dabei nicht zwingend ab Werk vorgegeben sein: es ist ebenso möglich, die Kombination zur jeweiligen Anordnung - bestehend aus Basismodul, Steuereinrichtung und Bedienmodul - erst im Rahmen der Installation der Gebäudeinstallationsgeräte vor Ort durch einen Installateur vorzunehmen.

In einer weiteren vorteilhaften Weiterbildung der Anordnung ist die Steuereinrichtung mit einem weiteren Bedienmodul verbunden, welches eine zusätzliche Ansteuerung der Steuereinrichtung ermöglicht.

Mit Hilfe des weiteren Bedienmoduls ist eine Nebenstellenfunktionalität realisierbar. Dies bedeutet, dass die Steuereinrichtung nicht nur von einem Bedienmodul, sondern von mehreren Bedienmodulen angesteuert werden kann. Die Schnittstelle zur Ankopplung der Bedienmodule, entweder an das Basismodul oder an die Steuereinrichtung, ist dabei derart ausgebildet, dass sie bei Bedarf für weitere Nebenstelleneingänge erweitert werden kann. Auf diese Weise können dem Kunden automatisch Nebenstellen zur Realisierung der gewünschten Funktionalität zur Verfügung gestellt werden, ohne dass hierfür zusätzliche Basismodule oder Steuereinrichtungen installiert werden müssen.

Im Folgenden werden Ausführungsbeispiele der Anordnung unter Bezug auf die beigefügten Figuren näher erläutert. In den Figuren sind:
- Figuren 1a bis 1d: schematische Darstellungen des prinzipiellen Aufbaus der erfindungsgemäßen Anordnung,
- Figur 2: eine schematische Darstellung der erfindungsgemäßen Anordnung mit angekoppeltem Bedienmodul,
- Figuren 3a und 3b: schematische Darstellungen alternativer Ausführungsformen eines als Installationskasten ausgebildeten Basismoduls,
- Figuren 4a bis 4d: schematische Darstellungen alternativer Energieversorgungsmöglichkeiten des Installationskastens.

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

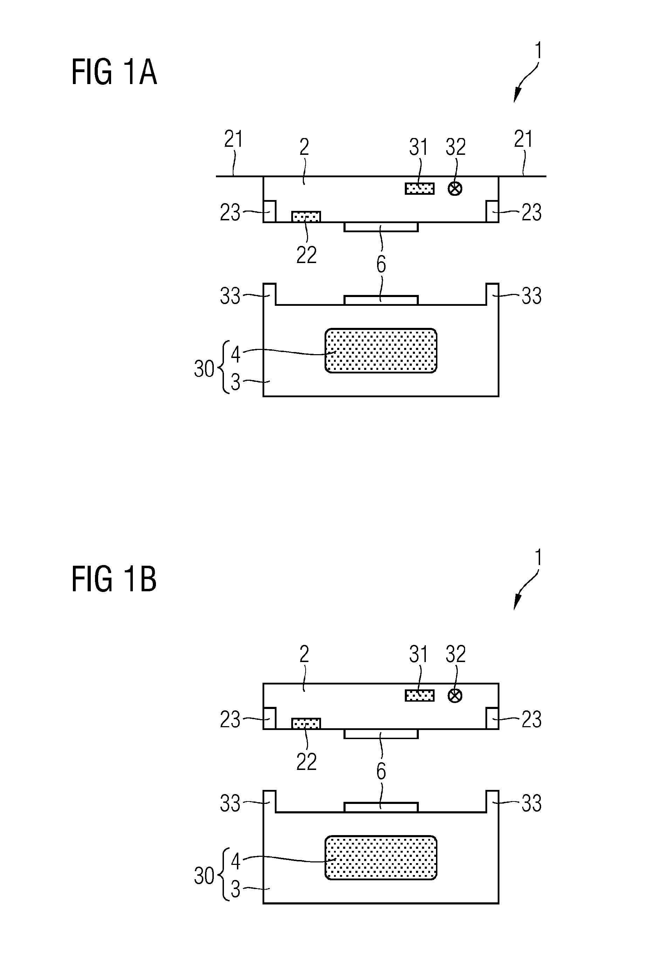

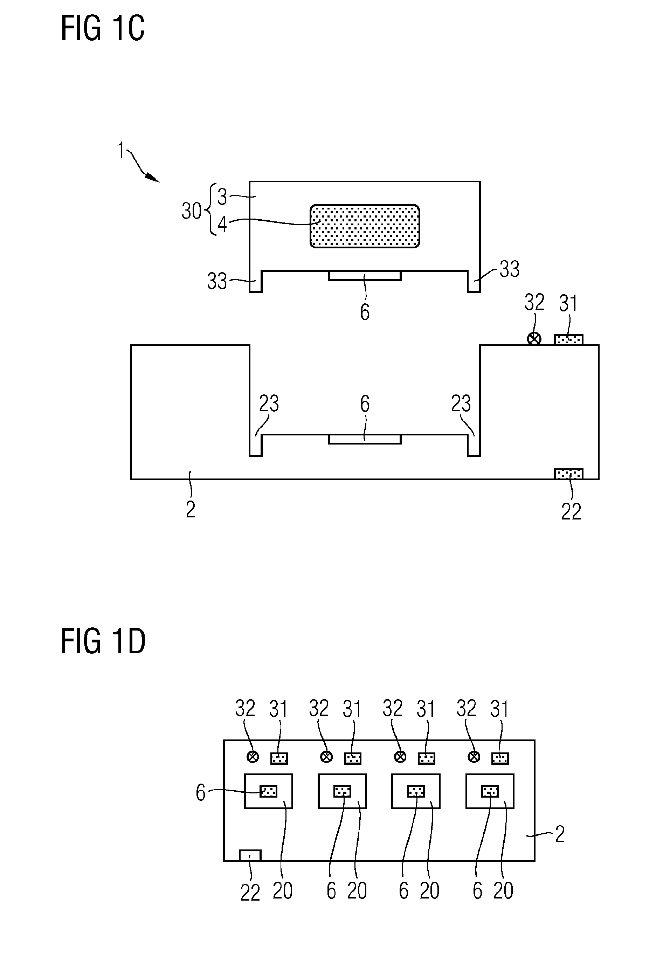

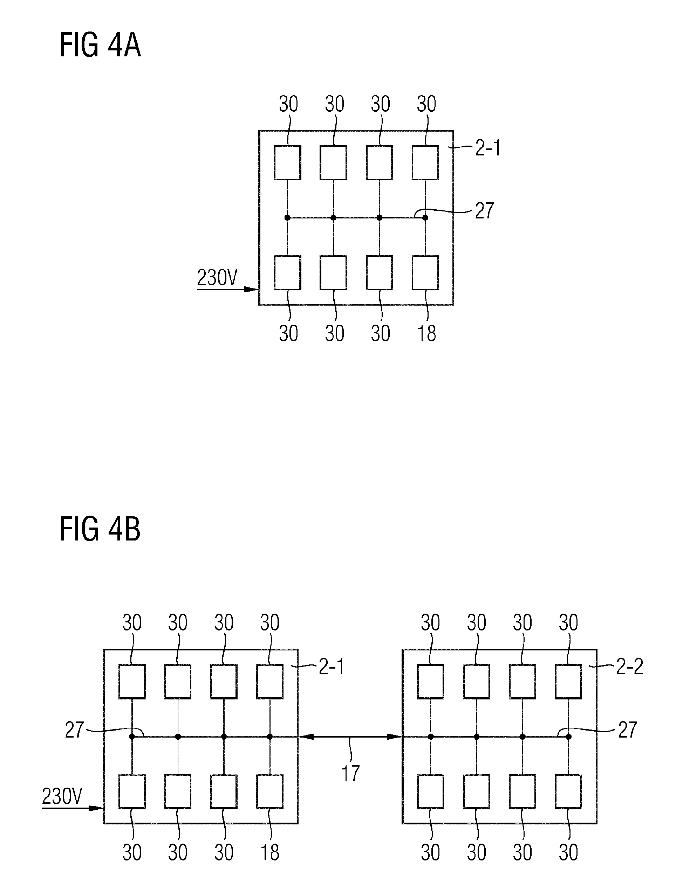

In den Figuren 1a bis 1d ist der prinzipielle Aufbau der erfindungsgemäßen Anordnung 1 schematisch dargestellt. Für unterschiedliche Montagearten wird dabei jeweils ein spezifisches Basismodul 2 verwendet. Die Figuren 1a und 1b zeigen beispielsweise jeweils eine Ausführung der Anordnung 1, wobei das Basismodul 2 zur Unterputz-Montage mit (Figur 1a) oder ohne (Figur 1b) Hängebügel 21 ausgebildet ist. Hingegen ist das in Figur 1c dargestellte Basismodul 2 für eine Aufputz-Montage vorgesehen. Das Basismodul 2 verfügt jeweils über eine Busanschlussklemme 22, über die eine Verbindung zu einem Bussystem 7 (siehe Fig. 4a bis d) realisierbar ist. Weiterer Bestandteil der Anordnung 1 ist ein Gehäuse 3, welches eine Steuereinrichtung 4 zur Ausführung einer definierten Funktion, beispielsweise einer Licht-, Temperatur- oder Jalousie-Steuerung, beinhaltet. Ein derartiges Gehäuse 3 mit der darin angeordneten Steuereinrichtung 4 wird üblicherweise als Sensor-/Aktor-Modul 30 bezeichnet. Für unterschiedliche Funktionen existiert jeweils eine spezifische Steuereinrichtung 4 und damit ein spezifisches Sensor-/Aktor-Modul 30, welches jeweils alle für die Ausführung der jeweiligen Funktion notwendigen Hard- und Firmware-Komponenten aufweist. Neben einer Funktionshardware und einem Prozessor ist hierzu auch eine Kommunikationsbaugruppe zu rechnen. Ein definierter Satz an Hardware-Funktionen, welche für mehrere Sensor-/Aktor-Module 30 benötigt werden, kann auch über das Basismodul 2 zur Verfügung gestellt werden. Diesbezüglich weist das Basismodul 2 in den Darstellungen der Figuren 1a bis 1d jeweils eine Programmiertaste 31 sowie eine dazugehörige Programmier-LED 32 auf. Die Programmiertaste 31 dient der Parametrierung der Funktionalität des Sensor-/Aktor-Moduls 30 durch einen Monteur oder Inbetriebnehmer, wobei die Programmier-LED 32 einen jeweiligen Programmierstatus anzeigt. Bei ausreichendem Montagebauraum wäre es prinzipiell ebenso möglich, die Programmiertaste 31 sowie die dazugehörige Programmier-LED 32 direkt am Sensor-/Aktor-Modul 30 anzuordnen.

Sowohl das Basismodul 2 als auch das Sensor-/Aktor-Modul 30 weisen eine Schnittstelle 6 auf, über die Daten zwischen der Steuereinrichtung 4 und dem Basismodul 2 ausgetauscht werden können. Die Schnittstelle 6 kann als sogenannte SAMI-Schnittstelle (Sensor-Aktor-Module-Interface) ausgebildet sein. Neben der Anpassung an die jeweilige Montagesituation können mit Hilfe des Basismoduls 2 auch verschiedene Hardware-Funktionen für das mit dem Basismodul 2 verbundenen Sensor-/Aktor-Modul 30 zur Verfügung gestellt werden. Beispielsweise kann über die SAMI-Schnittstelle 6 sowie die am Basismodul 2 ausgebildete Busanschlussklemme 22 eine Verbindung der Steuereinrichtung 4 zu einem Bussystem 7 (siehe Fig. 4a bis d) hergestellt werden. Über eigene Prozessorleistung verfügt das Basismodul 2 jedoch nicht; es fungiert für das Sensor-/Aktor-Modul 30 lediglich als Busankoppler. Über das Basismodul 2 sowie die Schnittstelle 6 kann das Sensor-/Aktor-Modul 30 auch mit elektrischer Energie versorgt werden. Weiterhin bietet die Schnittstelle 6 für eine eigenständige Adressierung und Programmierung des Sensor-/Aktor-Moduls 30 die Möglichkeit zur Identifizierung des Sensor-/Aktor-Moduls 30 sowie einer Anzeige, ob sich das Sensor-/Aktor-Modul 30 im Programmiermodus befindet; dies wird über die Programmier-LED 32 angezeigt.

Neben der informatorischen Schnittstelle 6 existiert zwischen dem Basismodul 2 und dem Gehäuse 3 auch eine mechanische Schnittstelle, mit deren Hilfe das Gehäuse 3 sicher an dem Basismodul 2 befestigt wird. In den Darstellungen der Figuren 1a bis 1c sind hierzu am Gehäuse 3 jeweils zwei Beinchen 33 ausgebildet, welche in entsprechende, am Basismodul 2 ausgebildete Rastöffnungen 23 verrasten. Die Steckverbindung stellt dabei nur eine mögliche Ausführungsform der mechanischen Schnittstelle dar. Alternativ können auch andere Ausführungsformen, beispielsweise eine Scharnier-Rast-Verbindung mit einem zwischen Basismodul 2 und Gehäuse 3 angeordneten Scharnier mit einer Verrastungsmöglichkeit verwendet werden.

Figur 1d zeigt ein Basismodul 2, welches mehrere Steckplätze 20, jeweils mit einer zugeordneten Schnittstelle 6, für eine Aufnahme und Ankopplung mehrerer Sensor-/Aktor-Module 30 aufweist. Ein derartiges Basismodul 2 kann sowohl für eine Auf-putz- als auch für eine Unterputz-Montage vorgesehen sein.

Die Anordnung 1, d.h. sowohl die unterschiedlichen Basismodule 2 als auch die verschiedenen Sensor-/Aktor-Module 30, ist dabei derart gestaltet, dass sie von einem Anwender, beispielsweise von einem Monteur, anwendungsspezifisch konfiguriert werden kann. Die Baugröße ist dabei derart bemessen, dass ein Sensor-/Aktor-Modul 30 auch in ein als herkömmliche UP-Dose ausgebildetes Basismodul 2 eingesetzt werden kann. Weiterhin ist es möglich, ein Sensor-/Aktor-Modul 30 ohne Änderungen an der Firmware oder der Konfiguration von einem Basismodul 2 zu entfernen und mit einem anderen Basismodul 2 zu kombinieren, so dass beispielsweise dieselbe Funktion mit einer anderen Montageart realisierbar ist.

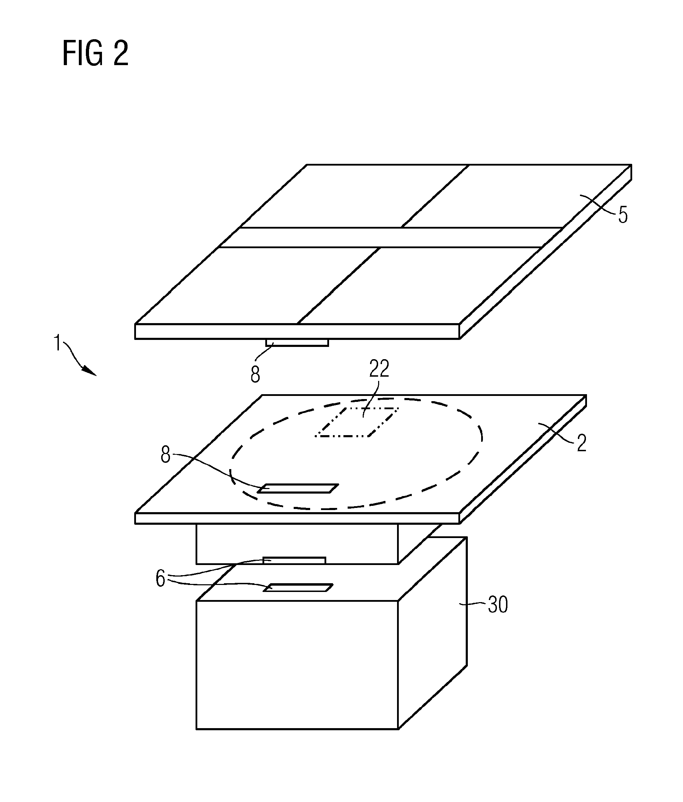

Figur 2 zeigt schematisch die erfindungsgemäße Anordnung 1 mit einem daran angekoppelte Bedienmodul 5. Die Anordnung 1 besteht im Wesentlichen wiederum aus dem Basismodul 2, an das über die Schnittstelle 6 ein Sensor-/Aktor-Modul 30 angekoppelt werden kann. Dabei verfügt das Basismodul 2 wiederum über eine Busanschlussklemme 22 (siehe Fig. 1) zum Anschluss der Anordnung 1 an ein Bussystem 7. Weiterhin weist das Basismodul 2 eine weitere Schnittstelle 8 auf, über die das Bedienmodul 5 mit dem Basismodul 2 gekoppelt werden kann. Bei dem Bedienmodul 5 kann es sich beispielsweise um einen Taster handeln.

Die Kommunikation des Bedienmoduls 5 mit dem Sensor-/Aktor-Modul 30 erfolgt über die weitere Schnittstelle 8 sowie die Schnittstelle 6. Für diese Kommunikation wird vorteilhafter Weise das Busprotokoll verwendet. Auf diese Weise kann ein mit dem Basismodul 2 verbundenes Sensor-/Aktor-Modul 30 mit Hilfe eines auf das Basismodul 2 aufgesteckten Bedienmoduls 5 mittels Buskommunikation angesteuert werden. Dabei kann die Konfiguration der Anordnung 1, d.h. die Kombination eines spezifischen Basismoduls 2 mit einem spezifischen Sensor-/Aktor-Modul 30 durch den Anwender vorgenommen werden. Dadurch, dass das Sensor-/Aktor-Modul 30 einen eigenen Prozessor mit anwendungsspezifischer Firmware und einer eigenen Busadresse besitzt, kann es unabhängig vom Bedienmodul 5 konfiguriert werden. Eine Anpassung oder Änderung einer Firmware im Bedienmodul 5 sowie dessen spezifische Konfiguration für das jeweils zugeordnete, mit dem Basismodul 2 verbundene Sensor-/Aktor-Modul 30 ist nicht mehr erforderlich.

Ferner erlaubt die dargestellte Anordnung 1, eine mit Hilfe der Steuereinrichtung 4 des Sensor-/Aktor-Moduls 30 zu realisierende Funktion in Betrieb zu nehmen, unabhängig davon, ob ein Bedienmodul 5 bereits angekoppelt ist oder nicht. Damit stehen für jedes neu entwickelte Sensor-/Aktor-Modul 30 ohne zusätzlichen Aufwand unterschiedliche Konfigurationsmöglichkeiten, d.h. Kombinationen mit verschiedenen Basismodulen 2 und/oder verschiedenen Bedienmodulen 5 zur Verfügung.

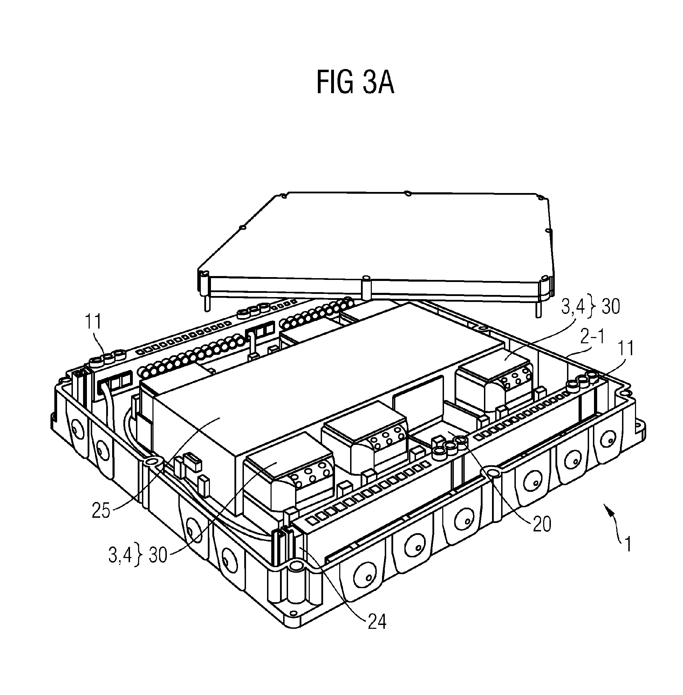

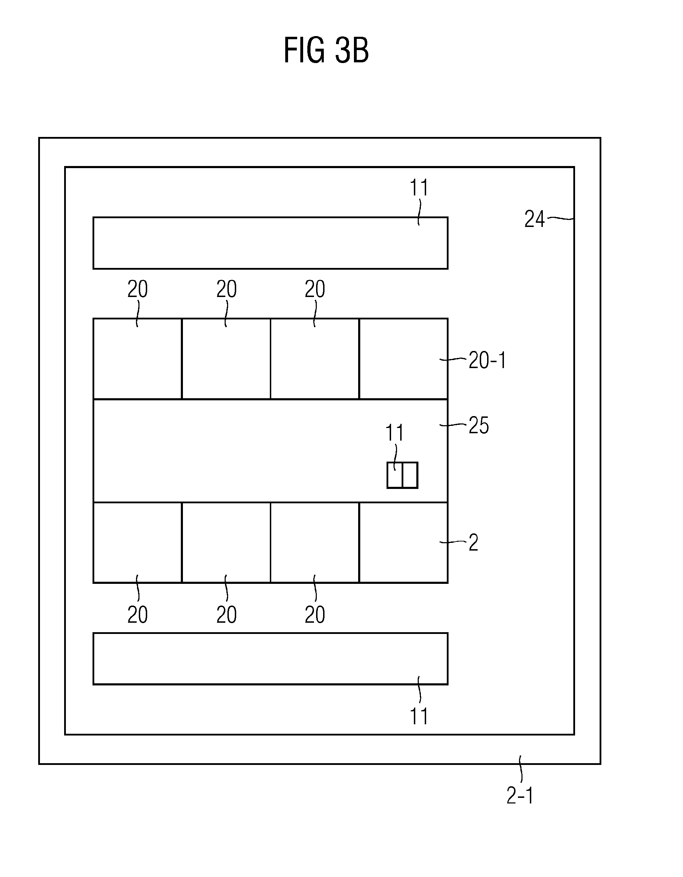

Die Figuren 3a und 3b zeigen schematisch verschiedene Ausführungsformen eines als Installationskasten 2-1 ausgebildeten Basismoduls 2. Die Verwendung eines Installationskastens 2-1 stellt eine weitere Montageart dar. Der Installationskasten 2-1 ist dabei in der Regel für eine Decken- oder Bodenmontage vorgesehen, d. h. der Installationskasten 2-1 wird unterhalb aufgeständerter Böden oder oberhalb abgehängter Decken installiert. Eine Wandmontage des Installationskastens 2-1 ist jedoch ebenfalls möglich. Mit Hilfe des Installationskastens 2-1 wird eine Schutzfunktion, beispielsweise gegenüber elektrischen Schlag, Feuchtigkeit, Staub oder anderen Umgebungseinflüssen realisiert. Ferner ist es möglich, den Installationskasten 2-1 verschließbar auszuführen, um einen Schutz gegen unbefugten Zugriff zu erhalten.

Der in den Figuren 3a und 3b dargestellte Installationskasten 2-1 weist in seinem Inneren eine Sammelschiene 11 auf. Dabei handelt es sich um Sammelschiene mit Klemmen zum Anschließen eingehender Leitungen und/oder zur internen Verdrahtung. Weiterhin weist der Installationskasten 2-1 eine Trägerplatten 24 auf, welche jeweils über mehrere Steckplätze 20 zum Ankoppeln von Sensor-/Aktor-Modulen 30 vorgesehen sind. Die Trägerplatte 24 weist ferner eine Busanschlussklemme 22 auf, mittels derer eine Kommunikationsverbindung der jeweils angekoppelten Sensor-/Aktor-Module 30 zu einem Bussystem 7 (siehe Fig. 4a bis d) realisierbar ist. Da die Steuereinrichtung 4 eines jeden Sensor-/Aktor-Moduls 30 bereits ein Prozessor sowie eine Kommunikationsbaugruppe aufweist, ist zur Steuerung des Installationskastens 2-1 kein zentraler Prozessor erforderlich.

Der Schutzkleinspannungsbereich der Busanschlussklemme 22 wird mittels einer Schutzabdeckung 25 von der Lastseite getrennt. Die Schutzabdeckung 25 isoliert somit den Schutzkleinspannungsbereich von der Lastseite.

Für die Funktionsfähigkeit der Anordnung 1 ist es dabei nicht erforderlich, an allen Steckplätzen 20 ein Sensor-/Aktor-Modul 30 anzukoppeln. Es ist ebenso möglich, nur einen Teil Steckplätze 20 entsprechend zu belegen. Die Steckplätze 20 sind einheitlich ausgeführt und können zum Ankoppeln verschiedener Sensor-/Aktor-Module 30 sowie von Sondermodul-Typen verwendet werden. Mit Hilfe einer mechanischen Kodierung ist es jedoch möglich, dass an bestimmten Steckplätzen 20 nur bestimmte Module ankoppelbar sind.

Die Energieversorgung für die Kommunikation kann dabei über das Bussystem 7 und die Busanschlussklemmen 22 zur Verfügung gestellt werden. Es ist jedoch ebenso möglich, einen der Steckplätze 20 für eine dezentrale Spannungsversorgung 18 vorzuhalten (siehe Fig. 4a bis d). Weiterhin kann einer der Steckplätze 20 auch zum Ankoppeln eines IP-Routers verwendet werden, um einen Zugang des Installationskastens 2-1 zu alternativen Netzwerken, wie beispielsweise IP- oder LAN-Netzen, zu ermöglichen. Ferner kann einer der Steckplätze 20 auch von einem Linienkoppler genutzt werden, um einen weitere Installationskasten 2-2 (siehe Fig. 4a bis d). Alternativ besteht die Möglichkeit, Sondermodul-Typen, wie IP-Router, Linienkoppler, dezentrale Spannungsversorgung 18 oder Programmierschnittstellen direkt in den Installationskasten 2-1 - beispielsweise in die Trägerplatte 24 mit Hilfe eines Sondersteckplatzes 20-1 - zu integrieren, so dass alle übrigen Steckplätze 20 zur Ankopplung von Sensor-/Aktor-Modulen 30 zur Verfügung stehen.

Die Figuren 4a bis 4d zeigen schematisch alternative Energieversorgungsmöglichkeiten des Installationskastens 2-1.

In Figur 4a wird der Installationskasten 2-1 im Inselbetrieb, d.h. autark eingesetzt. Durch ein internes Bussystem 27 sind die angekoppelten Sensor-/Aktor-Module 30 datentechnisch miteinander verbunden. Über eine dezentrale Spannungsversorgung 18, welche an eine externe Spannungsversorgung angeschlossen ist, wird das interne Bussystem 27 mit Spannung versorgt. Die dezentrale Spannungsversorgung 18 ist dabei an einem der Steckplätze 20 angekoppelt und wird über eine externe Stromleitung, bspw. eine 230V-Hausanschlussleitung versorgt. Es ist jedoch ebenso möglich, die dezentrale Spannungsversorgung 18 fest in den Installationskasten 2-1 zu integrieren.

In Figur 4b ist an den ersten Installationskasten 2-1 ein weiterer Installationskasten 2-2 über eine Busanschlussleitung 17 angekoppelt. Beide Installationskästen 2-1 und 2-2 weisen ein internes Bussystem 27 auf und werden wiederum autark zu ihrer Umgebung betrieben. Der erste Installationskasten 2-1 weist zur Spannungsversorgung der darin angeordneten Sensor-/Aktor-Module 30 wiederum eine dezentrale Spannungsversorgung 18 auf. Über die Busanschlussleitung 17 können jedoch auch die im weiteren Installationskasten 2-2 angekoppelten Sensor-/Aktor-Module 30 mit Spannung versorgt werden, so dass eine weitere dezentrale Spannungsversorgung nicht zwingend erforderlich ist. Bei Bedarf können jedoch weitere dezentrale Spannungsversorgungsmodule 18 an einem der freien Steckplätze 20 eines der beiden Installationskästen 2-1 und/oder 2-2 angekoppelt werden.

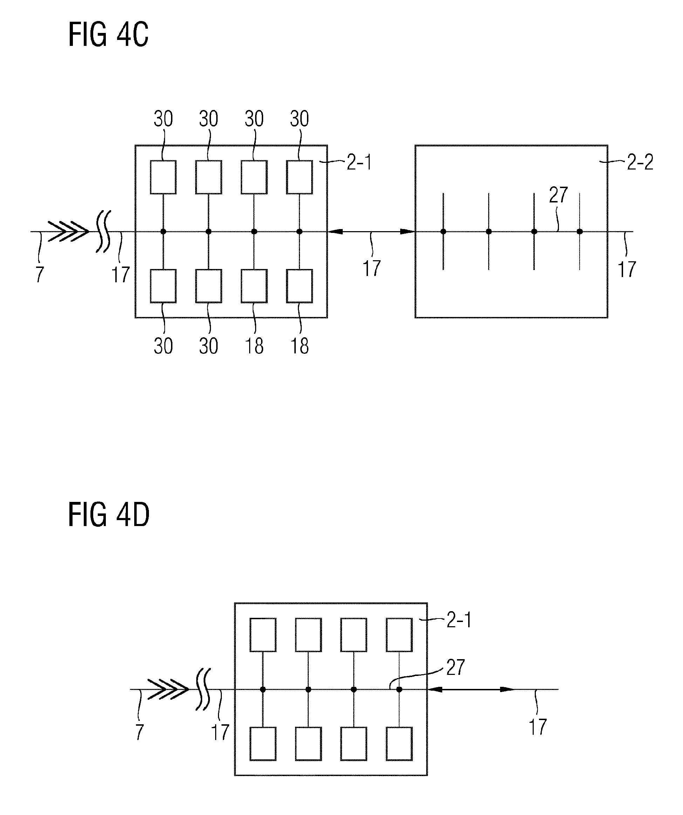

Im Unterschied dazu werden die in den Figuren 4c und 4d dargestellten Installationskästen 2-1 und 2-2 nicht autark betrieben, sondern sind über eine Busanschlussleitung 17 an ein externes Bussystem 7 angekoppelt. Dabei handelt es sich um ein Bussystem 7 mit zentraler Busspannungsversorgung, d.h. der erste Installationskasten 2-1 wird von der zentralen Busspannungsversorgung über die Busanschlussleitung 17 mit Spannung versorgt. Über die weiterführende Busverbindungsleitung 17 zwischen den Installationskästen 2-1 und 2-2 wird auch der weitere Installationskasten 2-2 mit Spannung versorgt. Ebenso können weitere angehängte Installationskästen über weitere weiterführende Busverbindungsleitungen 17 mit Spannung versorgt werden. Diese zentrale Busspannungsversorgung kann im Bedarfsfall um dezentrale Spannungsversorgungsmodule 18 ergänzt bzw. verstärkt werden, wobei auch mehrere dezentrale Spannungsversorgungsmodule 18 in einem Installationskasten möglich sind.

Die in den Figuren 3 und 4 dargestellten Installationskästen 2-1 und 2-2 können über die darin angeordneten Sammelschienen 11 mit den unterschiedlichsten Einbaugeräten der verschiedensten Hersteller bestückt werden. Die Anordnung der Sammelschiene 11 kann dabei je nach Anwendung in unterschiedlichen Positionen im Installationskasten platziert werden. Im Falle besonders flacher Installationskästen ist es auch möglich, die Einbaugeräte im Installationskasten liegend zu montieren. Die Sammelschiene ist in diesem Fall um 90° gedreht im Installationskasten anzuordnen. Je nach Anforderung können damit die unterschiedlichsten Konzepte zur Raumaufteilung im Inneren des Installationskastens 2-1 realisiert werden.

**Bezugszeichenliste**

| | |
|---|---|
| 1 | Anordnung |
| 2 | Basismodul |
| 2-1 | Installationskasten |
| 2-2 | weiterer Installationskasten |
| 3 | Gehäuse |
| 4 | Steuereinrichtung |
| 5 | Bedienmodul |
| 6 | Schnittstelle / SAMI-Schnittstelle |
| 7 | Bussystem |
| 8 | Schnittstelle |
| | |
| 11 | Sammelschiene |
| | |
| 17 | Busanschlussleitung |
| 18 | Versorgungseinheit / Spannungsversorgung |
| | |
| 20 | Steckplatz |
| 20-1 | Sondersteckplatz |
| 21 | Hängebügel |
| 22 | Busklemme |
| 23 | Rastöffnung |
| 24 | Trägerplatte |
| 25 | Schutzabdeckung |
| 27 | internes Bussystem |
| | |
| 30 | Aktor-/Sensor-Modul |
| 31 | Programmiertaste |
| 32 | Programmier-LED |
| 33 | Beinchen |

## Patentansprüche

1. Anordnung (1) zum Installieren von Geräten der Gebäudesystemtechnik,
mit einem Gehäuse (3), das eine Steuereinrichtung (4) zur Ausführung einer elektronischen Funktion beinhaltet,
mit einem Basismodul (2), das zur Befestigung des Gehäuses (3) für eine vorbestimmte Montagesituation ausgebildet ist,
dass das Gehäuse (3) und das Basismodul (2) für eine feste aber lösbare Verbindung ausgebildet sind, so dass in Abhängigkeit von der Montagesituation das Gehäuse (3) mit einem an die jeweilige Montagesituation angepassten Basismodul (2) verbindbar ist,
dass das Basismodul (2) als verschließbarer Installationskasten (2-1) ausgebildet ist, wobei der Installationskasten (2-1) eine Busanschlussleitung (17) zum Anschluss an ein Bussystem (7) aufweist,
dass der Installationskasten (2-1) eine Sammelschiene (11) zum Anschluss elektrischer Leitungen aufweist.

2. Anordnung (1) nach Anspruch 1,
**dadurch gekennzeichnet,**
**dass** die Busanschlussleitung (17) zur Leistungsversorgung des Basismoduls (2) ausgebildet ist.

3. Anordnung (1) nach Anspruch 1,
**dadurch gekennzeichnet,**
**dass** die Leistungsversorgung über eine im Installationskasten (2-1) angeordnete, Versorgungseinheit (18) realisiert ist.

4. Anordnung (1) nach einem der Ansprüche 1 bis 3,
**dadurch gekennzeichnet ,**
**dass** an den Installationskasten (2-1) ein weiterer Installationskasten (2-2) über die Busanschlussleitung (17) ankoppelbar ist.

5. Anordnung (1) nach Anspruch 1 bis 4,
**dadurch gekennzeichnet ,**
**dass** das Gehäuse (3) eine Steuereinrichtung (4) für eine Temperatursteuerung und/oder eine Lichtsteuerung und/oder eine Sonnenschutzsteuerung und/oder eine Brandschutzüberwachung und/oder eine Einbruchssicherung beinhaltet.

6. Anordnung (1) nach Anspruch 1 oder 5,
**dadurch gekennzeichnet ,**
**dass** das Basismodul (2) zur Aufnahme mehrerer Gehäuse (3) ausgebildet ist.

7. Anordnung (1) nach einem der vorstehenden Ansprüche,
**dadurch gekennzeichnet,**
**dass** das Gehäuse (3) und das Basismodul (2) über eine Schnittstelle (6) miteinander verbunden sind, die zur Übertragung elektrischer Signale und/oder zur elektrischen Leistungsversorgung ausgebildet ist.

8. Anordnung (1) nach Anspruch 7,
**dadurch gekennzeichnet,**
**dass** das Basismodul (2) an das Bussystem (7) ankoppelbar ist, so dass über die Schnittstelle (6) eine Verbindung der Steuereinrichtung (4) mit dem Bussystem (7) realisiert ist.

9. Anordnung (1) nach einem der vorstehenden Ansprüche,
**dadurch gekennzeichnet ,**
**dass** die Steuereinrichtung (4) mit einem Bedienmodul (5) verbunden ist, so dass eine Ansteuerung der Steuereinrichtung (4) ermöglicht wird.

10. Anordnung (1) nach einem der vorstehenden Ansprüche,
**dadurch gekennzeichnet ,**
**dass** die Steuereinrichtung (4) mit einem weiteren Bedienmodul (5) verbunden ist, welches eine zusätzliche Ansteuerung der Steuereinrichtung (4) ermöglicht.
